# FASCICULE DE BREVET EUROPEEN

(11) **EP 3 774 674 B1**
(45) Date de publication et mention de la délivrance du brevet: **25.03.2026**
(21) Numéro de dépôt: 19715527.8
(22) Date de dépôt: 10.04.2019
(51) Int. Cl.: C03B 5/42

(54) **FOUR VERRIER AVEC PIECE A NEZ ISOLEE**
GLASOFEN MIT ISOLIERTEM NASENSTEIN
GLASS FURNACE WITH INSULATED TUCKSTONE

(30) Priorité: 10.04.2018 FR 1853127
(43) Date de publication de la demande: 17.02.2021
(73) Titulaire: SAINT-GOBAIN CENTRE DE RECHERCHES ET D'ETUDES EUROPEEN, 92400 Courbevoie (FR)
(72) Inventeur: CABODI, Isabelle, 84300 CAVAILLON (FR); VESPA, Pierrick, 13100 AIX-EN-PROVENCE (FR); VILLERMAUX, Franceline, Marguerite, Louise, 84000 AVIGNON (FR); HIS, Christian, 84300 CAVAILLON (FR)
(74) Mandataire: Ipsilon
(86) Numéro de dépôt international: PCT/EP2019/059122
(87) Numéro de publication internationale: WO 2019/197484

(56) Documents cités:
- JP-A- 2017 065 985
- "Glass furnaces", 1 January 1987, article WOLFGANG TRIER: "Construction elements and dimensions", pages: 22,23,56,57, XP055527023

## Description

### Domaine technique

L'invention concerne un four verrier comportant une pièce à nez isolée.

### Etat de la technique

De nombreux produits verriers sont fabriqués par la fusion et l'affinage d'un mélange vitrifiable de matières premières comprenant des composés tels que des oxydes, des carbonates, des sulfates et des nitrates. Ces deux étapes sont réalisées dans des fours dont les principaux éléments constitutifs sont des produits réfractaires pouvant résister aux contraintes thermiques et mécaniques rencontrées dans ces fours, et en particulier aux hautes températures. Les fours verriers comprennent ainsi généralement un très grand nombre de produits réfractaires, disposés à différents endroits selon leurs propriétés. Pour chaque partie du four, le produit choisi est celui ne provoquant pas de défauts rendant le verre inutilisable (ce qui réduirait les rendements de production) et résistant suffisamment longtemps pour apporter au four une durée de vie satisfaisante.

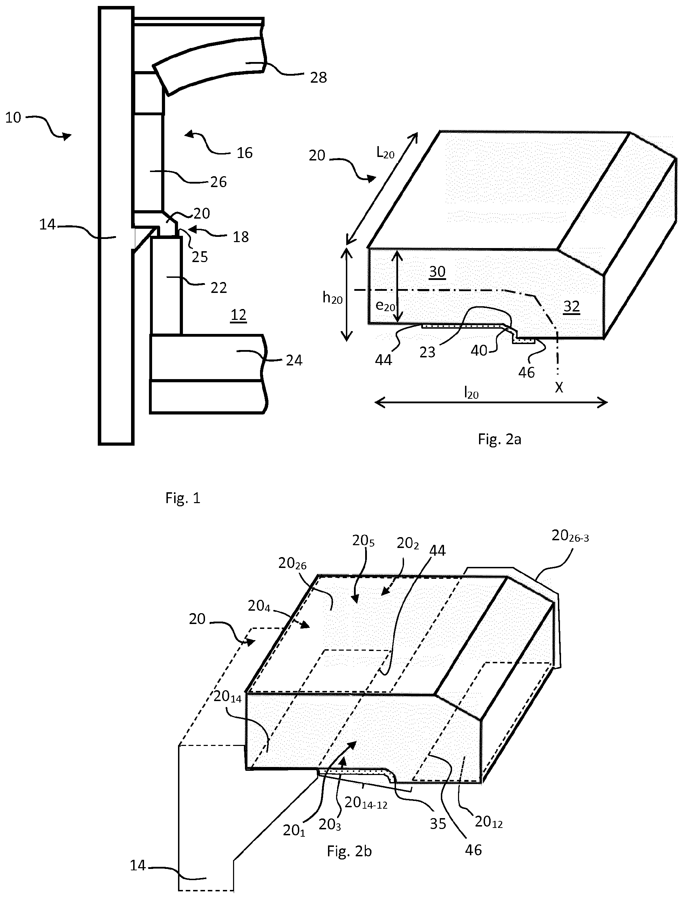

La figure 1 représente schématiquement une demi-coupe transversale d'un four verrier 10. On distingue en particulier une cuve 12, une structure métallique 14 et une superstructure 16.

La cuve 12, destinée à contenir le verre en fusion, comporte une paroi latérale 22 verticale et une sole 24. La paroi latérale 22 est classiquement constituée en blocs de cuve latéraux qui s'étendent sur toute la hauteur de la cuve, jusqu'à un bord supérieur 25.

La superstructure 16 comporte classiquement, à sa base, une strate intermédiaire 18 par laquelle elle repose sur la structure métallique, une paroi latérale 26 reposant sur la strate intermédiaire18, et une voûte 28. Des brûleurs, non représentés, sont disposés dans la paroi latérale 26 et fonctionnent en alternance.

La structure métallique 14, classiquement en fonte, entoure extérieurement la paroi latérale 22 de la cuve. Elle supporte le poids de la superstructure 16.

La strate intermédiaire 18 comporte, et de préférence est constituée, de pièces à nez de base 20 (« *tuckstones »* en anglais) qui, classiquement, présentent la forme représentée sur la figure 2a. Classiquement, chaque pièce à nez de base 20 présente la forme générale d'un profilé de section transversale en « L ». En service, la grande branche du L, ou « branche de superstructure » 30, s'étend horizontalement. La petite branche du L, ou « branche de cuve » 32, s'étend verticalement, sous la branche de superstructure 30.

La surface extérieure d'une pièce à nez de base 20 est constituée :
- de première et deuxième surfaces d'extrémité, 20₁ et 20₂ respectivement, délimitant la longueur L₂₀ de la pièce à nez de base, c'est-à-dire du profilé,
- d'une surface inférieure 20₃ comportant une surface de pose 20₁₄ horizontale reposant, en service, sur la structure métallique 14, une surface de cuve 20₁₂, de préférence horizontale, s'étendant en service en regard du bord supérieur 25 de la cuve 12, et une surface de transition inférieure 20₁₄₋₁₂ reliant la surface de pose 20₁₄ et la surface de cuve 20₁₂,
- d'une surface latérale extérieure 20₄, de préférence verticale,
- d'une surface supérieure 20₅ comportant une surface de superstructure 20₂₆, de préférence horizontale, sur laquelle, en service, la paroi latérale 26 repose, et une surface de transition supérieure 20₂₆₋₃ reliant la surface de superstructure 20₂₆ et la surface inférieure 20₃, et en particulier la surface de cuve 20₁₂.

Sur la figure 2b, les surfaces de cuve 20₁₂, de pose 20₁₄ et de superstructure 20₂₆ sont délimitées par un trait interrompu.

La pièce à nez de base 20 doit supporter des contraintes thermiques fortes puisque la branche de superstructure 30 est partiellement dans un environnement à une température de l'ordre d'une centaine de degrés, généralement de par la présence d'un refroidissement par soufflage d'air alors que la branche de cuve 32, partiellement à l'intérieur du four, est à des températures d'environ 1500°C.

Par ailleurs, la pièce à nez de base subit des cycles thermiques dus au fonctionnement en alternance des brûleurs et à des opérations de maintenance, telles que des opérations appelées « placage de cuve », qui nécessitent un arrêt puis une reprise du refroidissement externe du four, ou encore des opérations de changement de brûleurs ou de blocs brûleurs qui nécessitent un arrêt puis une reprise des brûleurs.

Pour résister à ces contraintes, la pièce à nez de base est constituée en un produit réfractaire, notamment en un produit de type Alumine-Zircone-Silice (AZS en abrégé) contenant généralement de 30 à 45% en masse de zircone, en un produit à très haute teneur en zircone (typiquement plus de 85% en masse de zircone), en un produit à haute teneur en alumine (typiquement plus de 90% en masse d'alumine), ou en un produit de zircon.

Cependant, la résistance à la fissuration des pièces à nez de base est parfois insuffisante pour répondre aux évolutions actuelles des besoins des verriers, qui demandent un allongement de la durée de vie des fours. En effet, la fissuration d'une pièce à nez de base peut entraîner une fracturation provoquant la chute de débris dans le bain de verre en fusion et générant ainsi des défauts dans le verre. En outre, la pièce à nez de base ne protège alors plus correctement la structure métallique et la cuve. Le reste de la superstructure peut également se trouver déséquilibré.

Le document JP2017065985 décrit un four de fusion de verre comprenant une pièce à nez ayant un corps supportant la superstructure. Ce corps comprend dans au moins une partie de sa surface inférieure une portion concave, dans laquelle un matériau thermiquement isolant peut être placé.

Il existe donc un besoin pour améliorer la résistance à la fissuration des pièces à nez de base. Un but de l'invention est de répondre à ce besoin.

### Résumé de l'invention

L'invention concerne un four verrier selon la revendication 1, la pièce à nez isolée comprenant ainsi :
- une pièce à nez de base définissant une surface extérieure telle que décrite ci-dessus ;
- une couche isolante présentant une conductivité thermique inférieure à 2,0 W.m⁻¹.K⁻¹ entre 20°C et 500°C et recouvrant une surface isolée de la pièce à nez de base, ladite surface isolée étant incluse dans la surface inférieure 20₃ de ladite pièce à nez de base, s'étendant, dans la surface de transition inférieure 20₁₄₋₁₂, et représentant plus de 20% de la surface de transition inférieure 20₁₄₋₁₂,
ladite couche isolante présentant une composition chimique, en pourcentage massique sur la base des oxydes, telle que la somme des teneurs en Al₂O₃, SiO₂, ZrO₂, CaO, Na₂O, MgO, K₂O, TiO₂, Fe₂O₃, HfD₂, P₂O₅ et Y₂O₃, ou « Al₂O₃ + SiO₂ + ZrO₂ + CaO + Na₂O + MgO + K₂O + TiO₂ + Fe₂O₃ + HfO₂ + P₂O₅ + Y₂O₃ » > 80%.

De manière surprenante, les inventeurs ont constaté que la présence d'une telle couche isolante améliore considérablement la résistance à la fissuration de la pièce à nez de base, et par conséquence sa durée de vie.

Dans la suite de la description, une dite pièce à nez, comportant une pièce à nez de base et une couche isolante, est appelée « pièce à nez isolée » ou « pièce à nez d'un four verrier selon l'invention ».

La couche isolante présente une rigidité suffisante pour être autoportante.

De préférence, la couche isolante présente une résistance à l'écrasement en compression supérieure à 10 MPa, ce qui améliore la stabilité de la pièce à nez, et son isolation.

Dans un mode de réalisation particulièrement avantageux, la couche isolante est un composite à matrice céramique, ou « CMC ». Un CMC s'est avéré particulièrement résistant à la dégradation thermique. Un CMC présente également une bonne résistance à la corrosion par des vapeurs sodiques. Il présente typiquement une rigidité suffisante pour former une couche isolante autoportante, ainsi qu'une résistance à la compression supérieure à 1 MPa et une résistance à l'écrasement en compression supérieure à 10 MPa.

On décrit encore un procédé de fabrication d'un four comportant une cuve de fusion de verre, une superstructure s'étendant au-dessus de la cuve, et une structure métallique supportant une paroi latérale de la superstructure, ledit procédé comportant l'intégration d'une dite pièce à nez isolée dans une strate intermédiaire entre la structure métallique et ladite paroi latérale de superstructure,
une paroi latérale de la superstructure reposant, directement ou non, de préférence directement sur la surface de superstructure de la pièce à nez de base,
une surface de pose de la pièce à nez de base reposant directement ou non, de préférence directement sur la structure métallique, et
une surface de cuve de la pièce à nez de base étant en regard d'un bord supérieur de la cuve.

L'invention concerne enfin un four verrier comportant :
- une cuve comportant un bord supérieur ;
- une structure métallique ; et
- une superstructure comportant une strate intermédiaire comportant une pièce à nez isolée d'un four verrier selon l'invention,

une paroi latérale de la superstructure reposant, directement ou non, de préférence directement sur la surface de superstructure de la pièce à nez de base,
une surface de pose de la pièce à nez de base reposant directement ou non, de préférence directement sur la structure métallique, et
une surface de cuve de la pièce à nez de base étant en regard d'un bord supérieur de la cuve.

De préférence, la strate intermédiaire est constituée de dites pièces à nez isolées.

La dite pièce à nez isolée peut encore comporter une ou plusieurs des caractéristiques optionnelles suivantes :
- la surface isolée s'étend au moins jusqu'à la surface de pose ;
- la surface isolée représente plus de 60% de la surface de transition inférieure ;
- la surface de transition inférieure inclut une surface de jonction inférieure reliant lesdites branches de superstructure et de cuve, et la surface isolée s'étend de manière à couvrir au moins ladite surface de jonction inférieure ;
- la surface de jonction inférieure relie une surface horizontale de la branche de superstructure incluant la surface de pose et une surface horizontale de la branche de cuve incluant la surface de cuve ;
- la surface isolée s'étend au moins à une partie d'une portion horizontale de la surface de transition inférieure définie par la branche de superstructure ;
- la surface isolée s'étend au moins à une partie de la surface de pose ;
- la surface isolée s'étend sur toute de la surface de pose ;
- la surface isolée s'étend jusqu'à une portion horizontale de la surface de transition inférieure définie par la branche de cuve, sans couvrir ladite portion horizontale ou la surface isolée s'étend au moins à une partie d'une portion horizontale de la surface de transition inférieure définie par la branche de cuve ;
- la surface isolée s'étend jusqu'à la surface de cuve ;
- la couche isolante est fixée sur la surface isolée ;
- la couche isolante est choisie parmi un feutre, un panneau isolant, une mousse céramique, un composite à matrice céramique et leurs mélanges ;
- la couche isolante présente une composition chimique, en pourcentage massique sur la base des oxydes, telle que Al₂O₃ + SiO₂ + ZrO₂ + CaO + Na₂O + MgO + K₂O + TiO₂ + Fe₂O₃ + HfO₂ + P₂O₅ + Y₂O₃ > 90% ;
- la couche isolante est constituée pour plus de 90% de sa masse d'oxydes ;
- la couche isolante est en un matériau fritté ;
- la couche isolante comporte, de préférence est constituée en un composite à matrice céramique constitué de fibres liées entre elles par une matrice céramique, les fibres représentant de préférence plus de 30%, et/ou moins de 70% du volume du composite à matrice céramique ;
- les fibres sont en un matériau oxyde comportant plus de 50% d'Al₂O₃ et/ou de SiO₂ et/ou de ZrO₂, en pourcentage en masse sur la base des oxydes ;
- les fibres sont choisies parmi
   - les fibres composées pour plus de 95% en masse d'alumine,
   - les fibres composées pour plus de 95% en masse de silice,
   - les fibres composées pour plus de 95% en masse de mullite, et
   - les fibres composées pour plus de 95% en masse de verre ;
- la matrice comprend Al₂O₃ et/ou SiO₂.
- la matrice présente une teneur en Al₂O₃ supérieure à 65% et/ou une teneur en SiO₂ supérieure à 15% et inférieure à 35% et/ou une teneur en oxydes autres que Al₂O₃ et SiO₂ inférieure à 3%, en pourcentage en masse sur la base de la matrice ;
- le composite à matrice céramique présente l'analyse chimique suivante, en pourcentage en masse sur la base des oxydes et pour un total de 100% :
   - SiO₂ : 47% - 67%,
   - Al₂O₃ : 32% - 52%,
   - Espèces oxydes autres que Al₂O₃ et SiO₂ : < 5% ;
- la couche isolante présente une conductivité thermique inférieure à 0,6 W.m¹.K⁻¹ entre 20°C et 500°C ;
- la couche isolante présente une structure en sandwich comportant, en superposition, une première plaque en un composite à matrice céramique, un matériau de remplissage présentant une conductivité thermique inférieure à 2,0 W.m⁻¹.K⁻¹ entre 20°C et 500°C, et une deuxième plaque en un composite à matrice céramique.

### Définitions

Dans un souci de clarté, on distingue la pièce à nez « de base » et la pièce à nez « isolée », la pièce à nez isolée étant constituée de la pièce à nez de base et de la couche isolante qui la recouvre, c'est-à-dire qui est en contact avec une partie de sa surface extérieure inférieure.

Un plan transversal est un plan perpendiculaire à la direction de la longueur. Le plan transversal médian est le plan transversal passant à mi-longueur.

« Inférieur » et « supérieur », « intérieur » et « extérieur », « horizontal » et « vertical », font référence à des orientations ou à des positions lorsque la pièce à nez isolée est dans sa position de service dans un four verrier, comme sur la figure 1.

Par « horizontal » et « vertical », on entend une orientation formant avec un plan parfaitement horizontal et vertical, respectivement, un angle inférieur à 5°, voire inférieur à 2°, voire inférieur à 1°.

Par « produit fondu », souvent appelé « électrofondu », on entend un produit obtenu par solidification complète d'une composition à l'état liquide obtenue par fusion d'un mélange de matières premières appropriées dans un four à arc électrique ou par toute autre technique adaptée.

Par « produit fritté », on entend un produit obtenu par mélange de matières premières appropriées puis mise en forme à cru de ce mélange et cuisson de la pièce crue résultante à une température et pendant un temps suffisants pour obtenir le frittage de cette pièce crue, ladite cuisson pouvant être effectuée *in situ* lors de l'utilisation.

Par « Composite à Matrice Céramique », ou « CMC », on entend classiquement un produit composé de fibres liées rigidement entre elles par une matrice céramique.

Par « céramique », on entend un produit qui n'est ni métallique, ni organique. Dans le cadre de la présente invention, le carbone n'est pas considéré comme un produit céramique.

Par « peau », on entend classiquement la région périphérique d'un bloc fondu, constituée à partir de la matière en fusion qui était à moins de 5 millimètres (mm) de la paroi du moule lors de sa solidification.

Une surface présente une « microstructure de peau » lorsqu'elle présente une densité de cristaux supérieure à 4 fois, voire supérieure à 6 fois, voire supérieure à 7 fois, voire supérieure à 9 fois la densité de cristaux mesurée à une profondeur de 4 centimètres (cm) sous ladite surface.

La « densité de cristaux » d'une surface est déterminée par comptage des cristaux visibles sur un cliché obtenu par microscopie de cette surface, après polissage de ladite surface avec une grille diamantée jusqu'au grade 1 micron. Chaque cristal est délimité par la phase vitreuse. Seuls les cristaux présentant une surface supérieure à 12 microns carrés sont comptabilisés. Pour vérifier si une surface d'une pièce à nez de base présente une microstructure de peau, on compte les cristaux visibles sur un cliché de cette surface après l'avoir polie, puis on découpe la pièce à nez de base à une profondeur de 4 cm sous cette surface et on compte les cristaux visibles sur un cliché de la surface ainsi exposée, après l'avoir polie.

Par « usinage », on entend une opération de rectification par laquelle la surface d'une pièce réfractaire est usinée afin d'obtenir une géométrie de surface précise. Classiquement, et dans un mode de réalisation particulier de l'invention, l'usinage conduit à retirer au moins la peau.

Si une pièce « supporte » ou « repose sur » une autre pièce, ces deux pièces sont en appui l'une sur l'autre. Les deux pièces peuvent être en contact ou séparées par un élément intermédiaire, notamment par une couche isolante.

La surface de cuve est la surface qui, dans la position de service, est « en regard » du bord supérieur de la cuve, c'est-à-dire qu'elle s'étend sensiblement parallèlement à ce bord, au-dessus et à proximité immédiate de ce bord. La surface de cuve est ainsi définie par l'ensemble des points de la surface extérieure qui sont à la distance minimale du bord de la cuve. La surface de cuve, de préférence horizontale, ne s'étend donc pas, vers l'extérieur de la
- cuve, au-delà du bord intérieur 35 qui délimite la surface horizontale inférieure de la branche de cuve (figure 2b). Le bord intérieur 35 peut en particulier définir une arête à angle droit.

Dans un souci de clarté, on utilise les formules chimiques des oxydes pour désigner les teneurs de ces oxydes dans une composition. Par exemple, « ZrO₂ », « SiO₂ » ou « Al₂O₃ » désignent les teneurs de ces oxydes et « zircone », « silice » et « alumine » sont utilisés pour désigner des phases de ces oxydes constituées de ZrO₂, SiO₂ et Al₂O₃, respectivement.

Sauf mention contraire, toutes les teneurs en oxydes sont des pourcentages massiques sur la base des oxydes. Une teneur massique d'un oxyde d'un élément métallique se rapporte à la teneur totale de cet élément exprimée sous la forme de l'oxyde le plus stable, selon la convention habituelle de l'industrie.

HfO₂ n'est pas chimiquement dissociable de ZrO₂. Cependant, selon la présente invention, HfO₂ n'est pas ajouté volontairement. HfO₂ ne désigne donc que les traces d'oxyde d'hafnium, cet oxyde étant toujours naturellement présent dans les sources de zircone à des teneurs massiques généralement inférieures à 5%, généralement inférieures à 2%. Dans une pièce à nez de base, la teneur massique en HfO₂ est de préférence inférieure à 5%, de préférence inférieure à 3%, de préférence inférieure à 2%. Par souci de clarté, on peut désigner indifféremment la teneur totale en oxyde de zirconium et en traces d'oxyde d'hafnium par « ZrO₂ » ou par « ZrO₂ + HfO₂ ».

La somme de teneurs d'oxydes n'implique pas la présence de tous ces oxydes. « comporter » ou « comprendre » ou « présenter » doivent être interprétés de manière non limitative.

### Brève description des figures

D'autres caractéristiques et avantages de l'invention apparaîtront encore à la lecture de la description détaillée qui va suivre et à l'examen du dessin annexé dans lequel :
- la figure 1 représente schématiquement une demi-coupe d'un four verrier ;
- la figure 2 (2a, 2b, 2c) est une vue schématique, en perspective, d'exemples de pièces à nez isolées d'un four verrier selon l'invention, la forme de la pièce à nez de base représentée étant la forme classique des pièces à nez conventionnelles ;
- la figure 3 est une vue schématique, en perspective, d'un exemple de pièce à nez isolée dans un mode de réalisation de l'invention préféré ;
- la figure 4 représente schématiquement le montage utilisé pour la mesure de la résistance pyroscopique de la couche isolante ;
- la figure 5 (5a, 5b, 5c, 5d) illustre le dispositif mis en œuvre pour tester les exemples ;
- la figure 6 (6a, 6b) représente, après le deuxième test des exemples, une pièce à nez d'un four verrier selon l'invention et une autre pièce à nez, les fissures ayant été repérées avec un marqueur.

### Description détaillée

Une pièce à nez isolée d'un four verrier selon l'invention comporte une pièce à nez de base 20 et une couche isolante 40.

### Pièce à nez de base

La figure 1 ayant été décrite en préambule, on se reporte à présent à la figure 2a, partiellement décrite en préambule.

La forme de la pièce à nez de base 20 peut être une forme connue pour les pièces à nez conventionnelles.

La longueur L₂₀ de la pièce à nez de base 20 est de préférence supérieure à 10 cm et de préférence inférieure à 100 cm. Sa largeur l₂₀ est de préférence supérieure à 30 cm et/ou inférieure à 100 cm et sa hauteur h₂₀ est de préférence supérieure à 10 cm et/ou inférieure à 50 cm.

Dans un plan de coupe transversal, c'est-à-dire perpendiculaire à la direction de la longueur L₂₀, on appelle « axe X » la ligne qui s'étend à mi-distance des surfaces supérieure 20₅ et inférieure 20₃. L'épaisseur e₂₀ de la pièce à nez de base est, en un point de l'axe X contenu dans le plan transversal médian, la plus petite dimension mesurée perpendiculairement à l'axe X en ce point. De préférence, l'épaisseur moyenne de la pièce à nez de base le long de l'axe X est supérieure à 10 cm et/ou inférieure à 50 cm. De préférence, cette épaisseur est constante le long de l'axe X.

De préférence, dans une section transversale quelconque, l'épaisseur de la pièce à nez de base de base est constante.

La pièce à nez de base est un profilé, de sorte que ses dimensions dans un plan transversal sont indépendantes du plan de coupe transversal considéré.

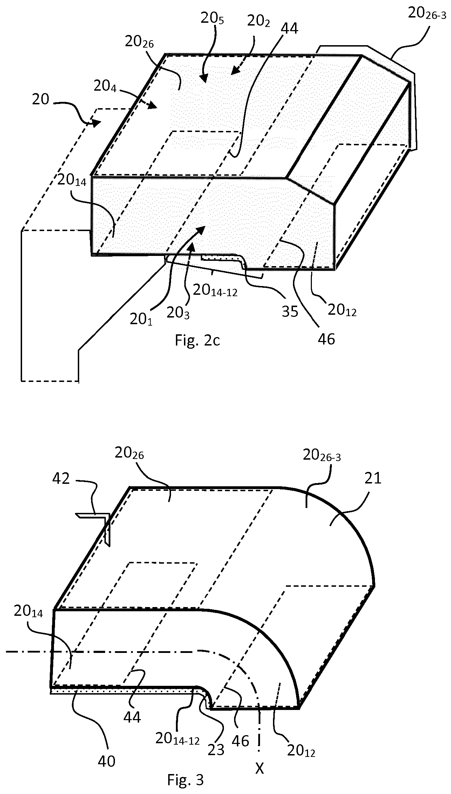

Comme le mode de réalisation de la figure 2, la surface supérieure et/ou la surface inférieure peuvent être constituées de pans plans.

Dans un mode de réalisation préféré (figure 3), la surface supérieure et/ou la surface inférieure comportent au moins une surface courbe.

De préférence, la surface de transition supérieure 20₂₆₋₃ de la pièce à nez de base définit, dans la partie de jonction entre les branches de superstructure et de cuve, une surface de jonction supérieure 21 courbe, c'est-à-dire non plane, dépourvue d'arête et qui, de préférence, comporte, voire constitue une fraction d'un cylindre de base circulaire. De préférence, comme représenté, cette fraction cylindrique s'étend angulairement sur 90° (quart d'un tronc de cylindre).

De préférence, cette surface de jonction supérieure relie une surface horizontale de la branche de superstructure, en particulier la surface horizontale qui contient la surface de superstructure, et une surface horizontale de la branche de cuve, en particulier la surface de cuve.

De préférence, la surface de transition inférieure 20₁₄₋₁₂ de la pièce à nez de base définit, dans la partie de jonction entre les branches de superstructure et de cuve, une surface de jonction inférieure 23 courbe dépourvue d'arête et qui, de préférence, comporte, voire constitue une fraction d'un cylindre de base circulaire. De préférence, comme représenté, cette fraction cylindrique s'étend angulairement sur 90°.

De préférence, cette surface de jonction inférieure relie une surface horizontale de la branche de superstructure, en particulier la surface horizontale qui contient la surface de pose, et une surface horizontale de la branche de cuve, en particulier la surface horizontale qui contient la surface de cuve.

Dans un mode de réalisation, cette fraction cylindrique est sensiblement coaxiale à la fraction cylindrique de la surface de transition supérieure.

Lorsque la pièce à nez de base est obtenue par coulage dans un moule, on réalise de préférence le moule par impression tridimensionnelle, ce qui permet de réaliser plus facilement des surfaces dépourvues d'arêtes, et en particulier la surface de transition supérieure et/ou la surface de transition inférieure, et notamment des fractions cylindriques de ces surfaces de transition. La résistance mécanique de la pièce à nez de base en est améliorée.

Les surfaces d'extrémité 20₁ et 20₂ de la pièce à nez de base sont de préférence planes, et en particulier dépourvues de décrochement, de préférence sensiblement parallèles l'une à l'autre, et de préférence sensiblement verticales.

Par ailleurs, dans un mode de réalisation, les première et deuxième surfaces d'extrémité de la pièce à nez de base définissent respectivement un tenon et une mortaise de forme complémentaire au dit tenon, de manière que, dans la position de service, ledit tenon soit logé dans une mortaise d'une première pièce à nez de base adjacente et que ladite mortaise reçoive un tenon d'une deuxième pièce à nez adjacente (emboîtement mâle/femelle).

La composition chimique de la pièce à nez de base peut être une composition connue pour les pièces à nez conventionnelles.

La pièce à nez de base est de préférence constituée pour plus de 95%, de préférence pour plus de 97%, de préférence pour plus de 99%, de préférence pour plus de 99,5%, de préférence pour plus de 99,9% de sa masse, d'oxydes.

De préférence, la pièce à nez de base présente une composition chimique, en pourcentage massique sur la base des oxydes, telle que Al₂O₃ + ZrO₂ + SiO₂ > 80,0%.

Dans un mode de réalisation, la pièce à nez de base, de préférence fondue, présente une composition chimique comportant, en pourcentage massique sur la base des oxydes, plus de 0,5%, voire plus de 1,5%, voire plus de 3,0%, voire plus de 4,0%, voire plus de 5,0%, voire plus de 6,0%, et/ou moins de 10,0%, voire moins de 9,0%, voire moins de 8,0% d'un stabilisant de la zircone, en particulier CaO et/ou Y₂O₃ et/ou MgO et/ou CeO₂, de préférence Y₂O₃ et/ou CaO, de préférence Y₂O₃.

Dans un mode de réalisation, la pièce à nez de base, de préférence fondue, présente une composition chimique, en pourcentages massiques sur la base des oxydes, telle que, pour un total de 100% :
- Al₂O₃ + ZrO₂ + SiO₂ : plus de 80,0%, de préférence plus de 84,0%, de préférence plus de 86,0%, et/ou moins de 97,0%, voire moins de 95,0%, voire moins de 94,0%,
- Y₂O₃: moins de 5,0%, voire moins de 4,0%, voire moins de 3,0% et de préférence plus de 0,5%, voire plus de 1,5%, voire plus de 2,0%,
- Na₂O : plus de 0,1%, voire plus de 0,2%, et/ou moins de 1,5%, de préférence moins de 1%, de préférence moins de 0,6%, de préférence moins de 0,5%, voire moins de 0,4%,
- B₂O₃ : plus de 0,1%, voire plus de 0,2% et moins de 0,6%, de préférence moins de 0,5%, voire moins de 0,4%,
- espèces oxydes autres que Al₂O₃, ZrO₂, SiO₂, Y₂O₃, Na₂O et B₂O₃ : moins de 13,0%, de préférence moins de 9,0%, de préférence moins de 8,0%, de préférence moins de moins de 5,0%, voire moins de 3,0%, voire moins de 2,0%, voire moins de 1,0%, voire moins de 0,5%.

Dans un mode de réalisation, la pièce à nez de base, de préférence fondue, présente de préférence une composition chimique, en pourcentages massiques sur la base des oxydes, telle que, pour un total de 100% :
- ZrO₂ : plus de 12,0%, de préférence plus de 20,0%, de préférence plus de 25,0%, de préférence plus de 30,0%, et/ou moins de 46,0%, de préférence moins de 42,0%, et
- SiO₂ : plus de 8,0%, de préférence plus de 10,0%, et/ou moins de 24,0%, de préférence moins de 20,0%, de préférence moins de 17,0%, et
- Al₂O₃ : plus de 35,0%, de préférence plus de 40,0%, et/ou moins de 60,0%, de préférence moins de 55,0%, de préférence moins de 50,0%, et
- Espèces oxydes autres que Al₂O₃, ZrO₂ et SiO₂ : moins de 10,0%, de préférence moins de 8,0%, de préférence moins de 6,0%, voire moins de 4,0%, voire moins de 3,0%,
   ou telle que
- ZrO₂ : plus de 80,0%, de préférence plus de 85,0%, et/ou moins de 97,0%, de préférence moins de 96,0%, et
- SiO₂ : plus de 0,5%, de préférence plus de 1,0%, de préférence plus de 2,0%, de préférence plus de 3,0%, et/ou moins de 15,0%, de préférence moins de 12,0%, de préférence moins de 10,0%, et
- Al₂O₃ : plus de 0,2%, et/ou moins de 3,0%, de préférence moins de 2,0%, et
- Espèces oxydes autres que Al₂O₃, ZrO₂ et SiO₂ : moins de 8,0%, de préférence moins de 6,0%, de préférence moins de 4,0%,
   ou telle que
- Al₂O₃ : plus de 90,0%, de préférence plus de 91,0%, et/ou moins de 98,0%, de préférence moins de 97,0%, et
- SiO₂ : plus de 0,2%, et/ou moins de 7,0%, de préférence moins de 6,0%, voire moins de 4,0%, voire moins de 3,0%, et
- Espèces oxydes autres que Al₂O₃ et SiO₂ : moins de 8,0%, de préférence moins de 6,0%, de préférence moins de 5,0%,
   ou telle que
- ZrO₂ : plus de 62,0%, de préférence plus de 64,0%, et/ou moins de 71,0%, de préférence moins de 69,0%, et
- SiO₂ : plus de 26,0%, de préférence plus de 28,0%, et/ou moins de 36,0%, de préférence moins de 34,0%, et
- Espèces oxydes autres que ZrO₂ et SiO₂ : moins de 6,0%, de préférence moins de 4,0%, de préférence moins de 3,0%,
   ou telle que
- SiO₂ : plus de 90,0%, de préférence plus de 93,0%, et
- Espèces oxydes autres que SiO₂ : moins de 10,0%, de préférence moins de 7,0%.

La microstructure de la pièce à nez peut être une microstructure connue pour les pièces à nez conventionnelles.

De préférence, la pièce à nez est un produit fondu et peut encore comporter une ou plusieurs des caractéristiques optionnelles suivantes :
- au moins une partie, de préférence toute la surface de transition inférieure de la pièce à nez présente une microstructure de peau ;
- au moins une partie, de préférence la totalité des surfaces de la pièce à nez destinées à être exposées à l'environnement à l'intérieur du four présente une microstructure de peau. En particulier, de préférence au moins une partie, de préférence toute la surface de cuve et/ou la surface de transition supérieure présente(nt) une microstructure de peau ;
- au moins une partie, de préférence toute la surface de pose 20₁₄ de la pièce à nez de base, de préférence toute la surface inférieure 20₃ et/ou tout ou partie de la surface de transition supérieure 20₂₆₋₃, de préférence au moins la partie non horizontale de la surface de transition supérieure 20₂₆₋₃ et/ou tout ou partie de la surface latérale extérieure 20₄ présente(nt) une microstructure de peau. La résistance à la fissuration ainsi que le temps d'usinage se trouvent ainsi améliorés ;
- au moins la surface de superstructure et les surfaces d'extrémité de la pièce à nez de base ne présentent pas une microstructure de peau ;
- la surface à microstructure de peau présente une densité de cristaux inférieure à 30 fois, voire inférieure à 25 fois, voire inférieure à 20 fois la densité de cristaux mesurée à une profondeur de 4 cm sous ladite surface ;
- la surface à microstructure de peau, et en particulier au moins une partie de la surface de transition inférieure, présente une densité de cristaux supérieure à 130 cristaux par millimètre carré (mm²), de préférence supérieure à 150 cristaux par mm², de préférence supérieure à 180 cristaux par mm², de préférence supérieure à 200 cristaux par mm², supérieure à 230 cristaux par mm², voire supérieure à 250 cristaux par mm² ;
- la pièce à nez de base présente une teneur en ZrO₂, en pourcentage massique sur la base des oxydes, supérieure à 80,0%, et la surface à microstructure de peau, et en particulier au moins une partie de la surface de transition inférieure, présente une densité de cristaux supérieure à 600 cristaux par mm², de préférence supérieure à 650 cristaux par mm², de préférence supérieure à 700 cristaux par mm², de préférence supérieure à 800 cristaux par mm², supérieure à 900 cristaux par mm², supérieure à 1000 cristaux par mm², voire supérieure à 1100 cristaux par mm² ;
- la pièce à nez présente une teneur en ZrO₂, en pourcentage massique sur la base des oxydes, supérieure à 80,0%, et le diamètre équivalent moyen desdits cristaux de la surface à microstructure de peau, et en particulier d'au moins une partie de la surface de transition inférieure, est inférieur à 45 µm, de préférence inférieur à 40 um, et/ou de préférence supérieur à 20 µm, ou supérieur à 30 µm.

L'obtention d'une microstructure de peau à la surface d'une pièce à nez fondue, c'est-à-dire en un produit fondu, ne pose pas de difficulté particulière à l'homme de l'art. En particulier, l'homme de l'art sait qu'une microstructure peut être rendue plus fine en surface en augmentant la vitesse de solidification de la matière en fusion.

Lorsque le bain de matière en fusion est coulé dans le moule, les propriétés du moule et la température du moule peuvent notamment être adaptées pour assurer un refroidissement suffisamment rapide pour obtenir une microstructure de peau. Par exemple, lorsque le moule est initialement à température ambiante, il se forme une microstructure de peau à la surface en contact ou à proximité des parois du moule. Si, contrairement à la pratique constante, cette peau n'est pas éliminée lors d'une opération d'usinage, on obtient ainsi une microstructure de peau sur les surfaces de la pièce à nez de base qui n'ont pas été usinées.

Un usinage limité (surfaçage) permet cependant de conserver une microstructure de peau.

Dans un mode de réalisation, la pièce à nez de base est pourvue d'un dispositif d'ancrage 42 dans l'enveloppe métallique du four de verrerie. Ce dispositif d'ancrage est par exemple constitué d'une vis, d'un crochet, d'une plaque métallique, ou d'une encoche. Ce dispositif d'ancrage est de préférence fixé à moins de 20 cm, de préférence moins de 10 cm, de préférence moins de 5 cm de la surface de superstructure, voire fixé sur la surface de superstructure (figure 3).

La pièce à nez de base peut être en un produit fritté.

Bien entendu, les dimensions, les formes et les microstructures décrites ci-dessus ne sont pas limitatives.

### Couche isolante

De préférence, la couche isolante 40 présente une composition chimique, en pourcentage massique sur la base des oxydes, telle que Al₂O₃ + SiO₂ + ZrO₂ + CaO + Na₂O + MgO + K₂O + TiO₂ + Fe₂O₃ + HfO₂ + P₂O₅ + Y₂O₃ > 85%, de préférence supérieure à 90%, voire supérieure à 95%.

De préférence, la couche isolante 40 présente une composition chimique, en pourcentage massique sur la base des oxydes, telle que Al₂O₃ + SiO₂ + ZrO₂ + CaO + Na₂O + MgO + K₂O + TiO₂ + Fe₂O₃ + HfO₂ > 80%, de préférence supérieure à 85%, de préférence supérieure à 90%, voire supérieure à 95%.

De préférence, la couche isolante présente une composition chimique, en pourcentage massique sur la base des oxydes, telle que Al₂O₃ + SiO₂ + ZrO₂ + CaO + HfO₂ > 80%, de préférence supérieure à 85%, de préférence supérieure à 90%, voire supérieure à 95%.

Dans un mode de réalisation, la couche isolante présente une composition chimique, en pourcentage massique sur la base des oxydes, telle que Al₂O₃ + SiO₂ > 80%, de préférence supérieure à 85%, de préférence supérieure à 90%, voire supérieure à 95%.

De préférence, la couche isolante est constituée pour plus de 90% de sa masse, de préférence pour plus de 95% de sa masse, de préférence pour plus de 98% de sa masse, de préférence pour plus de 99% de sa masse, de préférence pour plus de 99,5% de sa masse, d'oxydes.

De préférence, la couche isolante 40 est choisie parmi :
- un feutre, de préférence un feutre en fibres céramiques, de préférence présentant une teneur Al₂O₃ + SiO₂ supérieure à 80%, voire supérieure à 85%, voire supérieure à 90% en masse,
- un panneau isolant ou un panneau isolant fibreux rigide,
- une mousse céramique, de préférence présentant une teneur Al₂O₃ + SiO₂ supérieure à 80%, voire supérieure à 85%, voire supérieure à 90% en masse,
- un composite à matrice céramique (CMC), de préférence constitué pour plus de 90% de sa masse, de préférence pour plus de 95% de sa masse, de préférence pour plus de 98% de sa masse, de préférence pour plus de 99% de sa masse, de préférence pour plus de 99,5% de sa masse, d'oxydes,
- et leurs mélanges.

La couche isolante 40 présente une conductivité thermique inférieure à 2,0 W.m⁻¹,K⁻¹, de préférence inférieure à 1,8 W.m⁻¹,K⁻¹, de préférence inférieure à 1,5 W.m⁻¹,K⁻¹, de préférence inférieure à 1,3 W.m⁻¹.K⁻¹, de préférence inférieure à 1 W.m⁻¹.K⁻¹, de préférence inférieure à 0,9 W.m⁻¹,K⁻¹, de préférence inférieure à 0,8 W.m⁻¹.K⁻¹, de préférence inférieure à 0,7 W.m⁻¹,K⁻¹, de préférence inférieure à 0,6 W.m⁻¹.K⁻¹, de préférence inférieure à 0,5 W.m⁻¹.K⁻¹ entre 20°C et 500°C, de préférence entre 20°C et 600°C, de préférence entre 20°C et 700°C, de préférence entre 20°C et 800°C, de préférence entre 20°C et 900°C, de préférence entre 20°C et 1000°C.

De préférence, la couche isolante 40 recouvre plus de 40%, plus de 60%, plus de 70%, plus de 80%, plus de 90%, voire 100% de la surface de transition inférieure 20₁₄₋₁₂.

On appelle « surface isolée » la surface de la pièce à nez de base qui est incluse dans la surface inférieure et recouverte par la couche isolante, c'est-à-dire en contact avec cette couche.

La surface isolée s'étend sur au moins une partie de la surface de transition inférieure 20₁₄₋₁₂ qui relie la surface de pose 20₁₄ et la surface de cuve 20₁₂ de ladite pièce à nez de base, de préférence sur toute la surface de transition inférieure 20₁₄₋₁₂.

Comme représenté sur la figure 2c, la couche isolante ne s'étend pas nécessairement jusqu'à la surface de pose dans la surface de transition inférieure 20₁₄₋₁₂. De préférence cependant, elle s'étend de préférence à moins de 30 mm, de préférence à moins de 20 mm, de préférence à moins de 10 mm de la surface de pose. De préférence, la surface isolée s'étend jusqu'à la surface de pose, c'est-à-dire au moins jusqu'à la ligne 44 représentée sur les figures 2a, 2b et 3.

Dans les modes de réalisation représentés, la surface isolée s'étend ainsi sur au moins une partie de la portion horizontale de la surface de transition inférieure 20₁₄₋₁₂ définie par la branche de superstructure, au moins jusqu'à atteindre la surface de pose 20₁₄.

Dans un mode de réalisation, la surface isolée ne s'étend pas jusqu'à couvrir, même partiellement la surface de pose (figures 2a et 2b).

Dans un mode de réalisation, la surface isolée s'étend, en partie, voire entièrement à la surface de pose, comme représenté sur la figure 3. Dans la position de service (figure 1), elle est donc pincée entre la surface de pose 20₁₄ et la structure métallique 14. Lorsque la couche isolante est rigide, le pincement de la couche isolante entre la surface de pose et la structure métallique permet avantageusement de maintenir cette couche isolante contre la surface isolée, sans avoir besoin de la fixer sur la pièce à nez de base.

La surface isolée peut en particulier s'étendre sur plus de 50%, 60%, 70%, 80%, 90%, voire 100% de la surface de pose.

De préférence, la surface isolée s'étend au moins à la surface de jonction inférieure 23 qui relie les branches de superstructure et de cuve, comme représenté sur la figure 2a.

De préférence, la surface isolée s'étend au moins jusqu'à la surface de pose et au moins jusqu'à la surface de jonction. Ce mode de réalisation est particulièrement efficace pour éviter l'apparition de fissures en service.

Dans un mode de réalisation, la surface isolée ne s'étend pas, du côté de la branche de cuve, au-delà de la surface de jonction inférieure 23 du côté de la branche de cuve. Ainsi, sur la figure 2b, la surface isolée ne s'étend pas à la surface horizontale inférieure de la branche de cuve, c'est-à-dire au-delà du bord inférieur 35, ce qui facilite la mise en œuvre de la brique de nez isolée.

Dans un mode de réalisation préféré, la surface isolée s'étend sur la totalité de la surface de pose et jusqu'au bord inférieur 35.

Dans un autre mode de réalisation, la surface isolée s'étend, du côté de la branche de cuve, au-delà de la surface de jonction inférieure 23. Dans le mode de réalisation représenté sur la figure 2a, elle recouvre ainsi partiellement la surface horizontale inférieure de la branche de cuve.

De préférence, comme représenté sur la figure 2a, elle s'étend jusqu'à la surface de cuve. Cependant, de préférence, elle ne s'étend pas, du côté de la branche de cuve, jusqu'à couvrir, même partiellement, la surface de cuve, c'est-à-dire au-delà de la ligne 46 représentée sur les figures 2a, 2b et 3.

Dans un mode de réalisation préféré (figure 2a), la surface isolée s'étend à toute la surface de transition inférieure 20₁₄₋₁₂ de la pièce à nez de base.

Dans un mode de réalisation préféré, la surface isolée s'étend sur la totalité de la surface de pose et à toute la surface de transition inférieure 20₁₄₋₁₂ de la pièce à nez de base.

De préférence, la surface isolée est continue, c'est-à-dire en un seul morceau.

Le maintien de la couche isolante sur la surface isolée peut être réalisé par tout moyen connu de l'état de la technique.

De préférence, la couche isolante est rigidement fixée à la pièce à nez de base, c'est-à-dire qu'elle forme avec elle un ensemble monolithique, ce qui facilite sa manipulation lors de la fabrication du four. La couche isolante est de préférence collée sur la surface isolée, comme sur la figure 2a.

De préférence, l'adhésif utilisé pour fixer la couche isolante à la surface isolée est choisi parmi les mélanges de poudres céramiques et de liants, de préférence appliquée sous une forme liquide.

De préférence, les poudres sont des poudres d'alumine et/ou de silice et/ou de mullite. De préférence, les liants sont choisis parmi la silice colloïdale, le silicate de soude, les résines organiques, les colles organiques et leurs mélanges. L'adhésif utilisé peut également être un adhésif commercial comme les adhésifs Fixwool FX de la société Unifrax.

Dans un mode de réalisation, la surface isolée est localement structurée afin d'améliorer la fixation de la couche isolante 40. Par exemple, une ou plusieurs rainures, par exemple circulaires, fermées sur elles-mêmes, peuvent être ménagées afin de créer une ou plusieurs zones d'accrochage.

Elle peut être aussi fixée au moyen d'attaches, par exemple au moyen d'une cornière logée dans le renfoncement définissant la surface de transition inférieure 20₁₄₋₁₂ comprise entre la surface de pose 20₁₄ et le bord intérieur 35 de manière à prendre en sandwich la couche isolante avec ladite surface.

De préférence, la couche isolante 40 présente une épaisseur moyenne, de préférence constante, inférieure à 40 mm, de préférence inférieure à 32 mm, de préférence inférieure à 28 mm, de préférence inférieure à 22 mm, voire inférieure à 18 mm ou à 15 mm, ou/ou de préférence supérieure à 3 mm, de préférence supérieure à 5 mm, de préférence supérieure à 10 mm.

De préférence, la couche isolante 40 présente une rigidité suffisante pour être autoportante, c'est-à-dire conserver sa forme lorsqu'elle est manipulée à température ambiante. De préférence, elle présente une forme complémentaire à celle de la surface isolée.

La couche isolante 40 comporte de préférence des fibres céramiques, en particulier des fibres d'alumine et/ou de silice et/ou de zircone et/ou de verre, de préférence de verre lavé.

De préférence, la couche isolante comporte, de préférence est constituée d'un CMC. Avantageusement, le CMC présente une résistance mécanique suffisante pour résister aux chocs, ainsi qu'une rigidité suffisante pour être manipulé aisément et assemblé à la pièce à nez de base sans se déformer.

De préférence, le CMC comporte une ou plusieurs caractéristiques optionnelles suivantes :
- de préférence, le CMC est fritté ;
- le CMC présente une porosité ouverte, mesurée par imbibition, selon le principe de la poussée d'Archimède, supérieure à 25%, de préférence supérieure à 30% et inférieure à 45%, de préférence inférieure à 35% ;
- le CMC est constitué pour plus de 90%, de préférence pour plus de 95% de sa masse, de préférence pour plus de 98% de sa masse, de préférence pour plus de 99% de sa masse, de préférence pour plus de 99,5% de sa masse d'oxydes ;
- de préférence, le CMC comporte plus de 30%, de préférence plus de 40%, de préférence plus de 50%, de préférence plus de 60% et/ou moins de 70% en volume de fibres ;
- les fibres sont en un matériau oxyde comportant de préférence plus de 50%, de préférence plus de 60%, voire plus de 70%, voire plus de 80%, voire plus de 90% en masse d'Al₂O₃ et/ou de SiO₂ et/ou de ZrO₂ ;
- les fibres sont des fibres choisies parmi les fibres composées pour plus de 95%, de préférence plus de 98%, de préférence plus de 99%, de préférence sensiblement 100% en masse d'alumine, les fibres composées pour plus de 95%, de préférence plus de 98%, de préférence plus de 99%, de préférence sensiblement 100% en masse de silice, de préférence composées pour plus de 95%, de préférence plus de 98%, de préférence plus de 99%, de préférence sensiblement 100% en masse de silice amorphe, les fibres composées pour plus de 95%, de préférence plus de 98%, de préférence plus de 99%, de préférence sensiblement 100% en masse de mullite, les fibres composées pour plus de 95%, de préférence plus de 98%, de préférence plus de 99%, de préférence sensiblement 100% en masse de verre, de préférence lavé ;
- les fibres sont de préférence regroupées sous la forme de fils, un fil comportant typiquement plusieurs centaines à plusieurs milliers de fibres ;
- les fibres, de préférence les fils, sont de préférence continus, et présentent une longueur supérieure à 50 mm, voire supérieure à 100 mm.
- Dans un mode de réalisation, les fibres, de préférence les fils sont arrangés sous la forme d'un tissu (présentant des fils de trame et des fils de chaine) ou d'une nappe (non tissée). De préférence, les tissus et/ou les nappes sont disposés dans le CMC de manière s'étendre sensiblement parallèlement à la surface isolée de la pièce à nez de base ;
- la matrice est composée pour plus de 90%, de préférence pour plus de 95%, de préférence pour plus de 99% d'oxydes, en pourcentage massique ; De préférence la matrice est composée sensiblement entièrement d'oxydes ;
- la matrice comprend Al₂O₃ et/ou SiO₂ ;
- de préférence, la matrice comprend Al₂O₃ et SiO₂ ;
- de préférence, la teneur en Al₂O₃ dans la matrice, en pourcentage en masse sur la base de la matrice, est supérieure à 65%, de préférence supérieure à 70% ;
- de préférence, la teneur en SiO₂ dans la matrice, en pourcentage en masse sur la base de la matrice, est supérieure à 15%, de préférence supérieure à 20% et/ou inférieure à 35%, de préférence inférieure à 30% ;
- de préférence, la teneur en oxydes autres que Al₂O₃ et SiO₂ dans la matrice, en pourcentage en masse sur la base de la matrice, est inférieure à 3%, de préférence inférieure à 2%, de préférence inférieure à 1% ;
- de préférence, la teneur en Al₂O₃ est supérieure à 60%, de préférence supérieure à 65% ;
- dans un mode de réalisation, la teneur totale en Al₂O₃ et SiO₂ est supérieure à 80%, de préférence supérieure à 85%, de préférence supérieure à 90%, de préférence supérieure à 95%, en pourcentage en masse de la matrice sur la base des oxydes ;
- dans un mode de réalisation, la silice de la matrice est amorphe ;
- dans un mode de réalisation, le CMC présente l'analyse chimique suivante, en pourcentage en masse sur la base des oxydes et pour un total de 100%:
   - SiO₂ : 47% - 67%,
   - Al₂O₃ : 32% - 52%,
   - Espèces oxydes autres que Al₂O₃ et SiO₂ : < 5%, de préférence < 4%, de préférence < 3%, de préférence < 2% ;
- le CMC présente une conductivité thermique inférieure à 1,3 W.m⁻¹.K⁻¹, de préférence inférieure à 1 W.m⁻¹.K⁻¹, de préférence inférieure à 0,9 W.m⁻¹.K⁻¹, de préférence inférieure à 0,8 W.m⁻¹,K⁻¹, de préférence inférieure à 0,7 W.m⁻¹.K⁻¹, de préférence inférieure à 0,6 W.m⁻¹,K⁻¹, de préférence inférieure à 0,5 W.m⁻¹.K⁻¹, entre 20°C et 500°C, de préférence entre 20°C et 600°C ;
- le CMC présente une masse volumique apparente supérieure à 1,4 g/cm³, voire supérieure à 1,50 g/cm³ et/ou inférieure à 2 g/cm³, de préférence inférieure à 1,9 g/cm³, de préférence inférieure à 1,80 g/cm³.

Dans un mode de réalisation, la couche isolante présente une structure en sandwich comportant, en superposition, une première plaque, un matériau de remplissage, et une deuxième plaque.

Les première et deuxième plaques peuvent être fixées l'une à l'autre, de préférence de manière à former un tube ouvert à ses deux extrémités, un fourreau ouvert à une de ses extrémités ou une coque hermétique.

Au moins une, de préférence chacune des première et deuxième plaques est constituée en un CMC.

Au moins une, de préférence chacune des première et deuxième plaques présente une épaisseur supérieure à 2 mm, de préférence supérieure à 3 mm, de préférence supérieure à 5 mm.

Le matériau de remplissage présente de préférence une conductivité thermique inférieure à 2,0 W.m⁻¹.K⁻¹, de préférence inférieure à 1,8 W.m⁻¹,K⁻¹, de préférence inférieure à 1,5 W.m⁻¹.K⁻¹, de préférence inférieure à 1,3 W.m⁻¹.K⁻¹, de préférence inférieure à 1 W.m⁻¹.K⁻¹, de préférence inférieure à 0,9 W.m⁻¹.K⁻¹, de préférence inférieure à 0,8 W.m⁻¹.K⁻¹, de préférence inférieure à 0,7 W.m⁻¹.K⁻¹, de préférence inférieure à 0,6 W.m⁻¹.K⁻¹, de préférence inférieure à 0,5 W.m⁻¹.K⁻¹ entre 20°C et 500°C, de préférence entre 20°C et 600°C, de préférence entre 20°C et 700°C, de préférence entre 20°C et 800°C, de préférence entre 20°C et 900°C, de préférence entre 20°C et 1000°C. De préférence, le matériau de remplissage présente une conductivité thermique inférieure à celle des première et deuxième plaques.

Le matériau de remplissage peut être rigide ou en vrac, par exemple sous la forme de billes creuses d'alumine, d'une laine de fibres, par exemple d'alumine.

De préférence, la couche isolante 40 est configurée de manière à présenter une résistance à la rupture en flexion 3 points, mesurée suivant la norme ASTM C1341-13, supérieure à 3 MPa, de préférence supérieure à 6 MPa, de préférence supérieure à 10 MPa. Avantageusement, la résistance mécanique de la couche isolante, notamment sa résistance aux chocs, en est améliorée.

De préférence, et de manière obligatoire lorsque la couche isolante 40 est disposée sur au moins une partie de la surface inférieure de la branche de cuve de la pièce à nez de base (surface horizontale inférieure de la branche de cuve sur les figures), la couche isolante est configurée de manière à présenter une résistance pyroscopique supérieure à 400°C, de préférence supérieure à 600°C, de préférence supérieure à 800°C, de préférence supérieure à 1000°C. Avantageusement, la stabilité de la pièce à nez isolée en est augmentée.

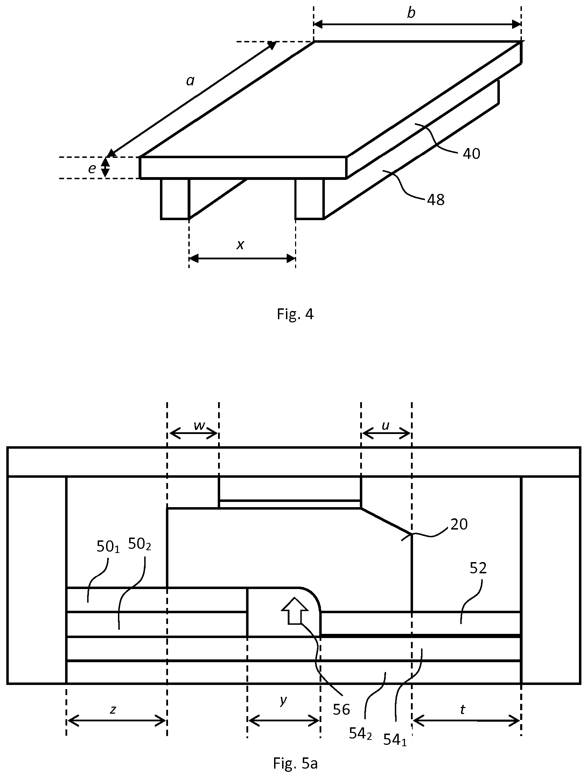

La résistance pyroscopique d'une couche isolante d'épaisseur e d'une pièce à nez isolée, à une température T, est déterminée à l'aide de la méthode suivante : un échantillon de ladite couche isolante de longueur *a* égale à 500 mm, de largeur *b* égale à 400 mm et d'épaisseur e est placé dans un four électrique, sur des briques 48 en RI34 d'épaisseur égale à 60 mm, suivant le montage représenté sur la figure 4, la dimension x étant égale à 250 mm. Dans ce montage, une des briques RI34 est orientée, par rapport à la couche isolante, comme la structure métallique lorsque la pièce à nez isolée est en position de service.

Le cycle thermique suivant est ensuite réalisé :
- montée de la température ambiante jusqu'à la température T à une vitesse égale à 50°C/h,
- maintien pendant 24 heures à la température T,
- descente à température ambiante à une vitesse égale à 50°C/h.

Après refroidissement complet, la déformation de la plaque sous son propre poids, estimée par la moyenne des flèches mesurées le long de chaque diagonale, est déterminée. La couche isolante est considérée comme présentant une résistance pyroscopique supérieure à la température T si la déformation de la plaque sous son propre poids est inférieure ou égale à 5 mm.

Pour mesurer la résistance à la compression d'une couche isolante d'épaisseur e d'une pièce à nez isolée, un échantillon de dimensions égales à 50 x 50 x 10 mm³ est extrait de la couche isolante de cette pièce, l'épaisseur de 10 mm étant selon la direction de l'épaisseur e.

Une charge est ensuite appliquée sur la totalité de la surface 50x50 mm² de l'échantillon, à température ambiante, suivant la direction de l'épaisseur, avec une vitesse de déplacement égale à 0,1 mm/min. On augmente cette charge jusqu'à rupture de l'échantillon. La résistance à la compression est égale à ladite charge exprimée en newton divisée par la surface sur laquelle est appliquée ladite charge (dans le cas présent 25 cm²).

De préférence, la couche isolante 40 est configurée de manière à présenter une résistance à la compression, par exemple mesurée comme décrit ci-dessus, supérieure à 5 MPa, de préférence supérieure à 10 MPa.

Pour mesurer la résistance à l'écrasement en compression d'une couche isolante d'épaisseur e, on en extrait un échantillon de dimensions égales à 50 x 50 x 10 mm³, l'épaisseur de 10 mm étant selon la direction de l'épaisseur e.

Une charge est ensuite appliquée, à température ambiante, sur la totalité de la surface 50 x 50 mm² de l'échantillon, suivant la direction de l'épaisseur, avec une vitesse de déplacement égale à 0,1 mm/min. On augmente la charge jusqu'à obtenir une réduction de moitié (autrement dit de 5 mm) de l'épaisseur de l'échantillon. La résistance à l'écrasement en compression est égale à la charge obtenue exprimée en newton divisée par la surface sur laquelle est appliquée ladite charge (dans le cas présent 25 cm²).

Classiquement, pour isoler la pièce à nez de la structure métallique, on utilise des couches isolantes constituées de nappes de fibres (« insulating mats » en anglais). A la différence de ces couches, la couche isolante 40 présente de préférence une résistance à l'écrasement en compression, par exemple mesurée comme décrit ci-dessus, supérieure à 10 MPa, ce qui améliore la stabilité de la superstructure.

De préférence, la couche isolante 40 est configurée de manière à présenter une résistance à l'écrasement en compression, par exemple mesurée comme décrit ci-dessus, supérieure à 20 MPa, de préférence supérieure à 30 MPa, de préférence supérieure à 50 MPa, ce qui améliore la stabilité de la superstructure.

La couche isolante 40 présente ainsi une résistance à l'écrasement en compression supérieure à celle des couches isolantes constituées de nappes de fibres (« insulating mats » en anglais) classiquement disposées entre la pièce à nez et la structure métallique.

De préférence, la couche isolante 40 est configurée de manière à présenter une résistance élevée aux chocs thermiques.

De préférence, la couche isolante 40 est configurée de manière à présenter une résistance élevée à la corrosion par des vapeurs sodiques. Avantageusement, sa durée de vie en service dans le four verrier en est augmentée.

L'utilisation d'un CMC, et en particulier du type de ceux décrits ci-dessus, est particulièrement bien adaptée pour obtenir ces propriétés.

### Fabrication

Tous les procédés de fabrication des pièces à nez conventionnelles peuvent être utilisés.

Tous les procédés de fabrication permettant d'obtenir un CMC peuvent être mis en œuvre.

Le procédé de fabrication peut en particulier comprendre les étapes suivantes ;
- imprégnation d'un ensemble de tissus ou de nappes, de préférence de tissus ou de nappes de fils, au moyen d'une barbotine apte à former une matrice après séchage et/ou frittage ;
- empilement desdits tissus et/ou nappes,
ledit empilement pouvant être réalisé par pressage, ou sous vide.

Les tissus ou les nappes peuvent être empilés de manière à ce que les fils des différents tissus ou nappes présentent sensiblement tous la même direction, ou des directions différentes, par exemple à 45°, en fonction notamment des propriétés mécaniques recherchées. L'empilement peut également être réalisé sur un support rigide présentant le profil de la surface isolée de la pièce à nez afin d'obtenir un CMC présentant un profil proche de celui de ladite surface isolée.

Lorsque la couche isolante est rigide, sa forme est de préférence adaptée à la surface isolée. Cette forme peut résulter du procédé de fabrication de la couche isolante ou être obtenue postérieurement, par exemple par usinage ou par déformation.

Dans un mode de réalisation, la pièce à nez de base et/ou la couche isolante sont disposées dans la position de service à cru, c'est-à-dire avant d'avoir été frittées. La pièce à nez de base est de préférence sous la forme d'un béton. Le frittage de la pièce à nez de base et/ou de la couche isolante est alors réalisé *in situ* dans le four.

### Exemples

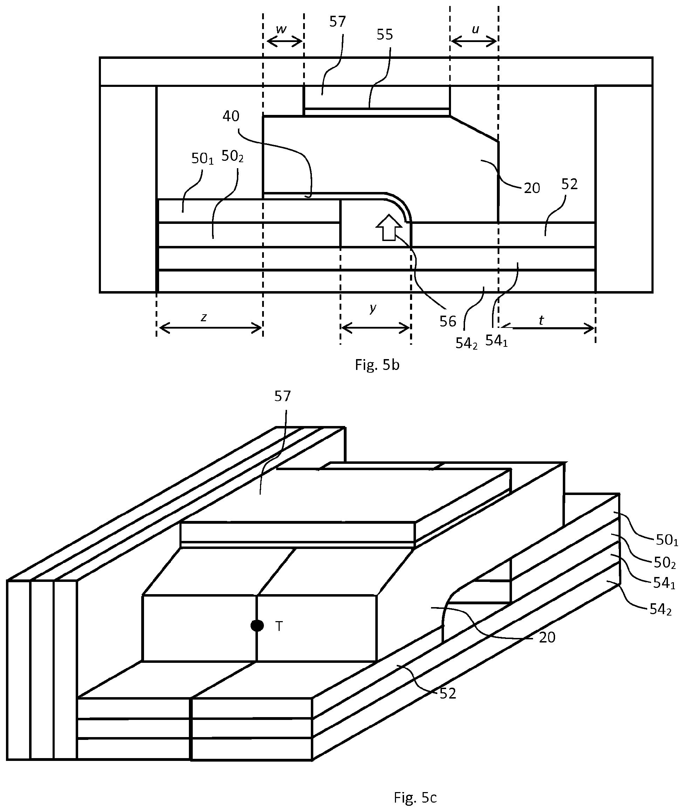

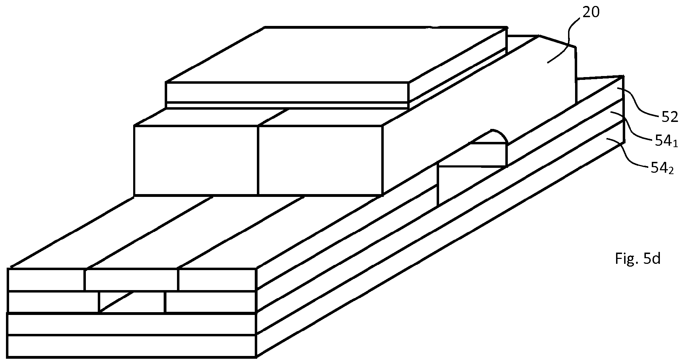

Pour reproduire les sollicitations subies en service, des pièces à nez de base présentant la forme d'un profilé de section transversale en « L », ayant une longueur L₂₀ égale à 270 mm, une largeur l₂₀ égale à 625 mm, une hauteur h₂₀ égale à 230 mm et une épaisseur e₂₀ égale à 170 mm (figure 2a), sont disposés dans un four dans lequel sont recréées les conditions en fonctionnement, comme représenté sur les figures 5a, 5b, 5c et 5d. Les figure 5a et figure 5b représentent des coupes d'un montage de test d'une pièce à nez qui ne caractérise pas un four verrier selon l'invention et d'un four verrier selon l'invention, respectivement, dans un plan transversal médian de ladite pièce à nez. Les dimensions *t, u, w, y* et z sont égales à 440 mm, 160 mm, 160 mm, 330 mm et 500 mm, respectivement. Les figures 5c et 5d représente une vue en perspective du montage des pièces à nez.

De manière intermittente, de l'air à pression égale à 4 bar et à température ambiante (20°C) est soufflé sur la surface de transition inférieure des pièces à nez, par le biais d'une gaine en alumine de diamètre intérieur égal à 25 mm, fermée en son extrémité, et comportant une lumière de largeur égale à 4,5 mm et de longueur égale à 270 mm, permettant à l'air de s'échapper dans la direction symbolisée par la flèche 56 dans les figures 5a et 5b.

La surface de pose de chaque pièce à nez repose sur deux rangs de briques 50₁ et 50₂ en RI34 et sa surface de cuve repose sur un rang de briques 52 en RI34, les briques présentant une épaisseur égale à 60 mm. Les briques 54₁ et 54₂ en RI34 reposent sur deux rangs de briques en RI30, chaque rang présentant une épaisseur égale à 60 mm.

Seules les surfaces d'extrémité des pièces à nez sont usinées. Les autres surfaces sont brutes de coulées et présentent une microstructure de peau. Les surfaces d'extrémité sont isolées thermiquement à l'aide d'une paroi verticale constituée d'une couche de briques de RI28 et deux couches de briques RI30 (seule une des deux parois est représentée à sur la figure 5c), chaque couche de briques présentant une épaisseur égale à 60 mm.

Sont posés sur la surface de superstructure de chaque pièce à nez de base, un feutre 55 d'Insulfrax^{®} présentant une épaisseur égale à 12 mm commercialisé par la société Unifrax, puis un rang de briques 57 en RI30 présentant une épaisseur égale à 60 mm.

Les briques en RI28, RI30 et RI34 sont commercialisées par la société Saint-Gobain réfractaires hautes performances.

Le test est réalisé sur deux pièces à nez de base, en un même matériau ER1195 commercialisé par la société Saint-Gobain SEFPRO, disposées côte à côte, une des pièces à nez de base étant dépourvue de couche isolante et servant de référence, et une pièce à nez de base étant revêtue d'une couche isolante, la surface isolée s'étendant sur toute la totalité de la surface de pose et à toute la surface de transition inférieure, de manière à constituer une pièce à nez isolée. La couche isolante est constituée en un feutre Insulfrax^{®} présentant une épaisseur constante égale à 12 mm et une conductivité thermique entre 20°C et 1000°C inférieure à 0,5 W.m⁻¹.K⁻¹, commercialisé par la société Unifrax. Elle est collée à l'aide de Fixwool^{®} FX commercialisé par la société Unifrax.

Un thermocouple T, dont l'emplacement est représenté dans la figure 5c, permet de réguler un brûleur à gaz, de manière à pouvoir ajuster la température du côté de la surface de transition supérieure des deux pièces à nez.

Le test réalisé est le suivant, la température étant régulée à l'aide du thermocouple T :
- Montée de la température ambiante jusqu'à 1400°C à une vitesse égale à 25°C/h, sans soufflage d'air,
- Maintien pendant 1 heure à 1400°C, sans soufflage d'air,
- Maintien pendant 6 heures à 1400°C avec soufflage d'air,
- Maintien pendant 6 heures à 1400°C sans soufflage d'air,
- Répétition 5 fois consécutivement des 2 phases immédiatement précédentes,
- Descente à température ambiante à une vitesse égale à 25°C/h.

L'endommagement des pièces à nez est évalué à l'aide d'un contrôle visuel. Ce contrôle, effectué avant et après le test, permet de mettre en évidence la présence de fissures éventuelles.

L'analyse et la caractérisation des microstructures des produits peuvent être effectuées à l'aide d'un microscope optique de type Richert Polyvar 2, de préférence en utilisant un grossissement x5, couplé avec un logiciel d'analyse d'images Image J. Le logiciel d'analyse d'images permet d'isoler les cristaux indépendants (c'est-à-dire entourés de phase vitreuse) et d'en déterminer la surface. On peut notamment distinguer les cristaux de zircone libre ou d'eutectique alumine-zircone. On ne retient que les cristaux dont la surface est supérieure à 12 microns carrés.

On évalue le nombre de cristaux (Nc) par mm² de surface à microstructure de peau (Nc-surface) ainsi que sur une surface située à 4 cm à l'intérieur de l'échantillon (Nc-interne). Les valeurs données correspondent à des moyennes sur 4 prélèvements. On calcule le rapport entre Nc-surface et Nc-interne. Un rapport supérieur à 4 est représentatif d'une microstructure de peau.

L'analyse chimique des produits est mesurée par « *Inductively Coupled Plasma* » ou ICP, après calcination du matériau à analyser à 1000°C pendant une heure, pour les éléments dont la quantité ne dépasse pas 0,5% ainsi que pour le bore et le lithium. Pour déterminer la teneur des autres éléments, une perle du matériau à analyser est fabriquée en fondant le matériau, puis l'analyse chimique est réalisée par fluorescence X.

La conductivité thermique de la couche isolante est donnée classiquement par le produit de la diffusivité thermique, de la masse volumique apparente et de la capacité thermique massique.

La diffusivité de la couche isolante est mesurée par la méthode flash utilisant une lampe halogène d'une puissance égale à 1000 W.

La masse volumique apparente est déterminée par pesée d'un volume apparent connu de couche isolante, la masse volumique apparente étant le rapport du résultat de ladite pesée et dudit volume apparent.

La capacité thermique massique est mesurée par calorimétrie différentielle à balayage (en anglais, *« differential scanning calorimetry* » ou «DSC»).

L'essai réalisé montre que la pièce à nez de référence présente, après essai, deux fissures, localisées sur la surface de transition inférieure et sur la surface de cuve, et présentant une longueur supérieure à 100 mm et une ouverture comprise entre 0,5 et 1 mm. La pièce à nez isolée d'un four verrier selon l'invention ne présente aucune fissure.

Un deuxième test est réalisé sur deux pièces à nez de base, en un même matériau ER1681 commercialisé par la société Saint-Gobain SEFPRO, disposées côte à côte.

La première des pièces à nez de base est dépourvue de couche isolante et sert de référence. La deuxième des pièces à nez de base est revêtue d'une couche isolante, la surface isolée s'étendant sur toute la surface de pose et toute la surface de transition inférieure, de manière à constituer une pièce à nez isolée d'un four verrier selon l'invention.

La couche isolante est constituée en un composite à matrice céramique (CMC) présentant une épaisseur constante égale à 13 mm, une conductivité thermique entre 20°C et 500°C inférieure à 0,6 W.m⁻¹.K⁻¹. Ce CMC est constitué, pour 44% de sa masse, de tissus (ou « woven fabrics » en anglais) en fibres de verre lavé (ou « leached glass » en anglais) comportant une teneur en silice supérieure à 90% en masse, et d'une matrice en alumine et silice en complément. Il présente une porosité ouverte égale à 38%, une masse volumique apparente égale à 1,65 g/cm³, une teneur en Al₂O₃ égale à 42%, une teneur en SiO₂ égale à 57% et une teneur en autres oxydes égale à 1%, les teneurs en Al₂O₃, SiO₂ et autres oxydes étant exprimées en pourcentages massiques sur la base des oxydes dudit composite à matrice céramique.

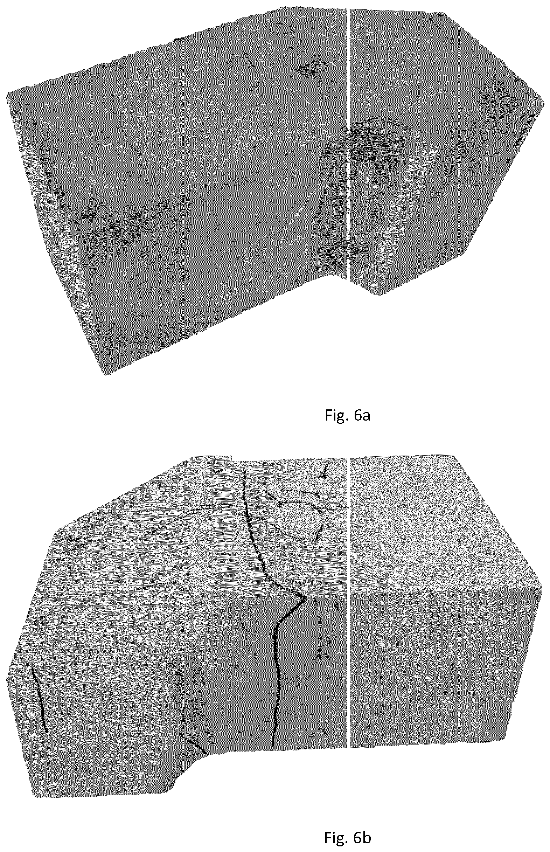

Après essai, la pièce à nez isolée d'un four verrier selon l'invention (fig. 6a) ne présente sensiblement pas de fissures alors que la pièce à nez de référence (fig. 6b) est parcourue de fissures, repérées avec un marqueur noir pour être plus visibles sur la figure.

Comme cela apparaît clairement à présent, l'invention permet d'améliorer la résistance à la fissuration et augmente ainsi la durée de vie du four.

Bien entendu, l'invention n'est pas limitée par les exemples, fournis à des fins illustratives seulement. Il va également de soi que les modes de réalisation décrits ne sont que des exemples.

## Revendications

1. Four verrier (10) comportant :
- une cuve (12) comportant un bord supérieur (25) ;
- une structure métallique (14) ; et
- une superstructure (16) comportant une paroi latérale (26) et une strate intermédiaire (18) comportant une pièce à nez isolée,
ladite pièce à nez isolée comprenant :
- une pièce à nez de base (20), fondue ou frittée, sous la forme d'un profilé de section transversale en « L » comportant des branches de superstructure (30) et de cuve (32), ladite pièce à nez de base définissant une surface extérieure constituée :
- de première et deuxième surfaces d'extrémité (20₁ ; 20₂) délimitant la longueur (L₂₀) de la pièce à nez de base,
- d'une surface inférieure (20₃) comportant une surface de pose (20₁₄) reposant, directement ou indirectement, sur la structure métallique (14), une surface de cuve (20₁₂) s'étendant en regard du bord supérieur (25) de la cuve (12), et une surface de transition inférieure (20₁₄₋₁₂) reliant la surface de pose (20₁₄) et la surface de cuve (20₁₂), la surface de pose étant horizontale ;
- d'une surface latérale extérieure (20₄) ;
- d'une surface supérieure (20₃) comportant une surface de superstructure (20₂₆) sur laquelle la paroi latérale (26) repose, et une surface de transition supérieure (20₂₆₋₃) reliant la surface de superstructure 20₂₆ et la surface inférieure (20₃) ;
- une couche isolante (40) présentant une conductivité thermique inférieure à 2,0 W.m⁻¹.K⁻¹ entre 20°C et 500°C, présentant une rigidité suffisante pour être autoportante, et recouvrant une surface isolée de la pièce à nez de base,
ladite surface isolée étant incluse dans la surface inférieure (20₃) de ladite pièce à nez de base, s'étendant dans la surface de transition inférieure (20₁₄₋₁₂), et représentant plus de 20% de la surface de transition inférieure (20₁₄₋₁₂),
ladite couche isolante présentant une composition chimique, en pourcentage massique sur la base des oxydes, telle que Al₂O₃ + SiO₂ + ZrO₂ + CaO + Na₂O + MgO + K₂O + TiO₂ + Fe₂O₃ + HfO₂ + P₂O₅ + Y₂O₃ > 80%,
la surface isolée ne s'étendant pas jusqu'à couvrir, même partiellement la surface de pose ou la couche isolante (40) étant pincée entre la surface de pose (20₁₄) et la structure métallique (14).

2. Four verrier selon la revendication immédiatement précédente, dans lequel la surface de transition inférieure (20₁₄₋₁₂) inclut une surface de jonction inférieure (23) reliant lesdites branches de superstructure (30) et de cuve (32), et la surface isolée s'étend de manière à couvrir au moins ladite surface de jonction inférieure (23), la surface de jonction inférieure (23) reliant de préférence une surface horizontale de la branche de superstructure (30) incluant la surface de pose (20₁₄) et une surface horizontale de la branche de cuve (32) incluant la surface de cuve (20₁₂).

3. Four verrier selon l'une quelconque des revendications précédentes, dans lequel la couche isolante (40) présente une résistance à l'écrasement en compression supérieure à 10 MPa.

4. Four verrier selon l'une quelconque des revendications précédentes, dans lequel la couche isolante (40) comporte, de préférence est constituée en un composite à matrice céramique constitué de fibres liées entre elles par une matrice céramique. l

5. Four verrier selon la revendication immédiatement précédente, dans lequel les fibres sont en un matériau oxyde comportant plus de 50% d'Al₂O₃ et/ou de SiO₂ et/ou de ZrO₂, en pourcentage en masse sur la base des oxydes, et/ou dans lequel les fibres représentent plus de 30% et de préférence moins de 70% du volume du composite à matrice céramique.

6. Four verrier selon la revendication immédiatement précédente, dans lequel les fibres sont choisies parmi
- les fibres composées pour plus de 95% en masse d'alumine,
- les fibres composées pour plus de 95% en masse de silice,
- les fibres composées pour plus de 95% en masse de mullite, et
- les fibres composées pour plus de 95% en masse de verre.

7. Four verrier selon l'une quelconque des trois revendications immédiatement précédentes, dans lequel la matrice comprend Al₂O₃ et/ou SiO₂.

8. Four verrier selon l'une quelconque des quatre revendications immédiatement précédentes, dans lequel la matrice présente une teneur en Al₂O₃ supérieure à 65% et/ou une teneur en SiO₂ supérieure à 15% et inférieure à 35% et/ou une teneur en oxydes autres que Al₂O₃ et SiO₂ inférieure à 3%, en pourcentage en masse sur la base de la matrice.

9. Four verrier selon l'une quelconque des cinq revendications immédiatement précédentes, dans lequel le composite à matrice céramique présente l'analyse chimique suivante, en pourcentage en masse sur la base des oxydes et pour un total de 100% :
- SiO₂ : 47% - 67%,
- Al₂O₃ : 32% - 52%,
- Espèces oxydes autres que Al₂O₃ et SiO₂ : < 5%.

10. Four verrier selon l'une quelconque des revendications précédentes, dans lequel la couche isolante (40) est fixée sur la surface isolée.

11. Four verrier selon l'une quelconque des revendications précédentes, dans lequel la surface isolée s'étend au moins jusqu'à la surface de pose et/ou jusqu'à la surface de cuve (20₁₂).

12. Four verrier selon l'une quelconque des revendications précédentes, dans lequel la surface isolée représente plus de 60% de la surface de transition inférieure (20₁₄₋₁₂).

13. Four verrier selon l'une quelconque des revendications précédentes, dans lequel la surface isolée s'étend au moins à une partie d'une portion horizontale de la surface de transition inférieure (20₁₄₋₁₂) définie par la branche de superstructure.

14. Four verrier selon l'une quelconque des revendications précédentes, dans lequel la surface isolée s'étend au moins à une partie de la surface de pose (20₁₄).

15. Four verrier selon l'une quelconque des revendications précédentes, dans lequel la surface isolée s'étend jusqu'à une portion horizontale de la surface de transition inférieure (20₁₄₋₁₂) définie par la branche de cuve, sans couvrir ladite portion horizontale.

16. Four verrier selon l'une quelconque des revendications 1 à 13, dans lequel la surface isolée s'étend au moins à une partie d'une portion horizontale de la surface de transition inférieure (20₁₄₋₁₂) définie par la branche de cuve.

17. Four verrier selon l'une quelconque des revendications précédentes, dans lequel la couche isolante (40) est en un matériau fritté, et/ou présente une conductivité thermique inférieure à 0,6 W.m⁻¹.K⁻¹ entre 20°C et 500°C.

18. Four verrier selon l'une quelconque des revendications précédentes, dans lequel la couche isolante (40) présente une structure en sandwich comportant, en superposition, une première plaque en un composite à matrice céramique, un matériau de remplissage présentant une conductivité thermique inférieure à 2,0 W.m⁻¹.K⁻¹ entre 20°C et 500°C, et une deuxième plaque en un composite à matrice céramique.

## Patentansprüche

1. Glasofen (10), umfassend:
- eine Wanne (12), die einen oberen Rand (25) umfasst;
- eine Metallstruktur (14); und
- einen Oberbau (16), umfassend eine Seitenwand (26) und eine Zwischenschicht (18), die einen isolierten Nasenstein umfasst,
wobei dieser isolierte Nasenstein aufweist:
- einen geschmolzenen oder gesinterten Basisnasenstein (20) in Form eines "L"-Querschnittsprofils, umfassend Oberbauschenkel (30) und Wannenschenkel (32), wobei der Basisnasenstein eine Außenfläche definiert, die aus Folgendem besteht:
- ersten und zweiten Endflächen (20₁; 20₂), die die Länge (L₂₀) des Basisnasensteins begrenzen,
- einer unteren Fläche (20₃), die eine Auflagefläche (20₁₄) umfasst, die direkt oder indirekt auf der Metallstruktur (14) aufliegt, einer Wannenfläche (20₁₂), die sich gegenüber dem oberen Rand (25) der Wanne (12) erstreckt, und einer unteren Übergangsfläche (20₁₄₋₁₂), die die Auflagefläche (20₁₄) und die Wannenfläche (20₁₂) verbindet, wobei die Auflagefläche horizontal ist;
- einer äußeren Seitenfläche (20₄);
- einer oberen Fläche (20₅), umfassend eine Oberbaufläche (20₂₆), auf der die Seitenwand (26) aufliegt, und einer oberen Übergangsfläche (20₂₆₋₃), die die Oberbaufläche 20₂₆ und die untere Fläche (20₃) verbindet;
- eine isolierende Schicht (40), die eine Wärmeleitfähigkeit von weniger als 2,0 W.m⁻¹.K⁻¹ zwischen 20 °C und 500 °C aufweist, eine ausreichende Steifigkeit aufweist, um selbsttragend zu sein, und eine isolierte Fläche des Basisnasensteins bedeckt,
wobei die isolierte Fläche in der unteren Fläche (20₃) des Basisnasensteins enthalten ist, sich in der unteren Übergangsfläche (20₁₄₋₁₂) erstreckt und mehr als 20 % der unteren Übergangsfläche (20₁₄₋₁₂) ausmacht,
wobei die isolierende Schicht eine derartige chemische Zusammensetzung in Massenprozent auf der Basis der Oxide aufweist, dass Al₂O₃ + SiO₂ + ZrO₂ + CaO + Na₂O + MgO + K₂O + TiO₂ + Fe₂O₃ + HfO2 + P₂O₅ + Y₂O₃ > 80 %,
wobei sich die isolierte Fläche nicht erstreckt, bis sie auch nur teilweise die Auflagefläche bedeckt oder die isolierende Schicht (40) zwischen der Auflagefläche (20₁₄) und der Metallstruktur (14) eingeklemmt wird.

2. Glasofen nach dem unmittelbar vorhergehenden Anspruch, wobei die untere Übergangsfläche (20₁₄₋₁₂) eine untere Verbindungsfläche (23) beinhaltet, die den Oberbauschenkel (30) und den Wannenschenkel (32) verbindet, und die isolierte Fläche sich so erstreckt, dass sie mindestens die untere Verbindungsfläche (23) bedeckt, wobei die untere Verbindungsfläche (23) bevorzugt eine horizontale Fläche des Oberbauschenkels (30), die die Auflagefläche (20₁₄) beinhaltet, und eine horizontale Fläche des Wannenschenkels (32), die die Wannenfläche (20₁₂) beinhaltet, verbindet.

3. Glasofen nach einem der vorhergehenden Ansprüche, wobei die isolierende Schicht (40) eine Druckfestigkeit von mehr als 10 MPa aufweist.

4. Glasofen nach einem der vorhergehenden Ansprüche, wobei die isolierende Schicht (40) einen Keramik-Matrix-Verbundwerkstoff umfasst, bevorzugt daraus besteht, der aus Fasern besteht, die durch eine Keramikmatrix untereinander gebunden sind. 1

5. Glasofen nach dem unmittelbar vorhergehenden Anspruch, wobei die Fasern aus einem Oxidmaterial sind, das mehr als 50 % Al₂O₃ und/oder SiO₂ und/oder ZrO₂ in Massenprozent auf der Basis der Oxide umfasst, und/oder wobei die Fasern mehr als 30 Volumen-% und bevorzugt weniger als 70 Volumen-% des Keramik-Matrix-Verbundwerkstoffs ausmachen.

6. Glasofen nach dem unmittelbar vorhergehenden Anspruch, wobei die Fasern ausgewählt sind aus
- Fasern, die zu mehr als 95 Massen-% aus Aluminiumoxid zusammengesetzt sind,
- Fasern, die zu mehr als 95 Massen-% aus Siliziumdioxid zusammengesetzt sind,
- Fasern, die zu mehr als 95 Massen-% aus Mullit zusammengesetzt sind, und
- Fasern, die zu mehr als 95 Massen-% aus Glas zusammengesetzt sind.

7. Glasofen nach einem der drei unmittelbar vorhergehenden Ansprüche, wobei die Matrix Al₂O₃ und/oder SiO₂ umfasst.

8. Glasofen nach einem der vier unmittelbar vorhergehenden Ansprüche, wobei die Matrix einen Gehalt an Al₂O₃ von mehr als 65 % und/oder einen Gehalt an SiO₂ von mehr als 15 % und weniger als 35 % und/oder einen Gehalt an anderen Oxiden als Al₂O₃ und SiO₂ von weniger als 3 %, in Massenprozentsatz auf der Basis der Matrix, aufweist.

9. Glasofen nach einem der fünf unmittelbar vorhergehenden Ansprüche, wobei der Keramik-Matrix-Verbundwerkstoff die folgende chemische Analyse, in Massenprozentsatz auf der Basis der Oxide und bei einer Summe von 100 %, aufweist:
- SiO₂: 47 % - 67 %,
- Al₂O₃: 32 % - 52 %,
- andere Oxidspezies als Al₂O₃ und SiO₂: < 5 %.

10. Glasofen nach einem der vorhergehenden Ansprüche, wobei die isolierende Schicht (40) auf der isolierten Fläche fixiert ist.

11. Glasofen nach einem der vorhergehenden Ansprüche, wobei sich die isolierte Fläche mindestens bis zu der Auflagefläche und/oder zu der Wannenfläche (20₁₂) erstreckt.

12. Glasofen nach einem der vorhergehenden Ansprüche, wobei die isolierte Fläche mehr als 60 % der unteren Übergangsfläche (20₁₄₋₁₂) ausmacht.

13. Glasofen nach einem der vorhergehenden Ansprüche, wobei sich die isolierte Fläche mindestens an einem Teil eines horizontalen Abschnitts der unteren Übergangsfläche (20₁₄₋₁₂) erstreckt, der durch den Oberbauschenkel definiert wird.

14. Glasofen nach einem der vorhergehenden Ansprüche, wobei sich die isolierte Fläche mindestens an einen Teil der Auflagefläche erstreckt (20₁₄).

15. Glasofen nach einem der vorhergehenden Ansprüche, wobei sich die isolierte Fläche bis zu einem horizontalen Abschnitt der unteren Übergangsfläche (20₁₄₋₁₂) erstreckt, der durch den Wannenschenkel definiert wird, ohne den horizontalen Abschnitt zu bedecken.

16. Glasofen nach einem der Ansprüche 1 bis 13, wobei sich die isolierte Fläche mindestens an einem Teil eines horizontalen Abschnitts der unteren Übergangsfläche (20₁₄₋₁₂) erstreckt, der durch den Wannenschenkel definiert wird.

17. Glasofen nach einem der vorhergehenden Ansprüche, wobei die isolierende Schicht (40) aus einem gesinterten Material ist und/oder eine Wärmeleitfähigkeit von weniger als 0,6 W.m⁻¹.K⁻¹ zwischen 20 °C und 500 °C aufweist.

18. Glasofen nach einem der vorhergehenden Ansprüche, wobei die isolierende Schicht (40) eine Sandwichstruktur aufweist, die übereinander eine erste Platte aus einem Keramik-Matrix-Verbundwerkstoff, ein Füllmaterial, das eine Wärmeleitfähigkeit von weniger als 2,0 W.m⁻¹.K⁻¹ zwischen 20 °C und 500 °C aufweist, und eine zweite Platte aus einem Keramik-Matrix-Verbundwerkstoff umfasst.

## Claims

1. Glass furnace (10) comprising:
- a tank (12) comprising an upper edge (25);
- a metallic structure (14); and
- a superstructure (16) comprising a lateral wall (26) and an intermediate course (18) comprising an insulated tuckstone,
said insulated tuckstone comprising:
- a cast or sintered basic tuckstone (20), in the form of a profile section of L-shaped cross section comprising a superstructure leg (30) and a tank leg (32), said basic tuckstone defining an exterior surface made up:
- of first and second end surfaces (20₁; 20₂) delimiting the length (L₂₀) of the basic tuckstone,
- of a lower surface (20₃) comprising a laying surface (20₁₄) resting, directly or indirectly, on the metallic structure (14), a tank surface (20₁₂) extending facing the upper edge (25) of the tank (12), and a lower transition surface (20₁₄₋₁₂) connecting the laying surface (20₁₄) and the tank surface (20₁₂), the laying surface being horizontal;
- of an exterior lateral surface (20₄);
- of an upper surface (20₅) comprising a superstructure surface (20₂₆) on which the lateral wall (26) rests, and an upper transition surface (20₂₆₋₃) connecting the superstructure surface (20₂₆) and the lower surface (20₃);
- an insulating layer (40) exhibiting a thermal conductivity lower than 2.0 W.m⁻¹.K⁻¹ between 20°C and 500°C, exhibiting enough rigidity to be self-supporting, and covering an insulated surface of the basic tuckstone, said insulated surface being included in the lower surface (20₃) of said basic tuckstone, extending into the lower transition surface (20₁₄₋₁₂), and representing more than 20% of the lower transition surface (20₁₄₋₁₂),
said insulating layer having a chemical composition, as a percentage by mass on the basis of the oxides, such that Al₂O₃ + SiO₂ + ZrO₂ + CaO + Na₂O + MgO + K₂O + TiO₂ + Fe₂O₃ + HfO₂ + P₂O₅ + Y₂O₃ > 80%,
the insulated surface not extending so far as to cover, even partially, the laying surface, or the insulating layer (40) being sandwiched between the laying surface (20₁₄) and the metallic structure (14).

2. Glass furnace according to the immediately preceding claim, wherein the lower transition surface (20₁₄₋₁₂) includes a lower junction surface (23) connecting said superstructure leg (30) and tank leg (32), and the insulated surface extends in such a way as to cover at least said lower junction surface (23), the lower junction surface (23) preferably connecting a horizontal surface of the superstructure leg (30) including the laying surface (20₁₄) and a horizontal surface of the tank leg (32) including the tank surface (20₁₂).

3. Glass furnace according to either one of the preceding claims, wherein the insulating layer (40) has a compressive crush strength greater than 10 MPa.

4. Glass furnace according to any one of the preceding claims, wherein the insulating layer (40) comprises, preferably is made up of, a ceramic matrix composite made up of fibres bound together by a ceramic matrix. 1

5. Glass furnace according to the immediately preceding claim, wherein the fibres are made of an oxide material comprising more than 50% Al₂O₃ and/or SiO₂ and/or ZrO₂, as a percentage by mass on the basis of the oxides, and/or wherein the fibres represent more than 30% and preferably less than 70% of the volume of the ceramic matrix composite.

6. Glass furnace according to the immediately preceding claim, wherein the fibres are selected from among
- fibres made up, by mass, of more than 95% alumina,
- fibres made up, by mass, of more than 95% silica,
- fibres made up, by mass, of more than 95% mullite, and
- fibres made up, by mass, of more than 95% glass.

7. Glass furnace according to any one of the three immediately preceding claims, wherein the matrix contains Al₂O₃ and/or SiO₂.

8. Glass furnace according to any one of the four immediately preceding claims, wherein the matrix has an Al₂O₃ content greater than 65% and/or an SiO₂ content greater than 15% and less than 35%, and/or a content of oxides other than Al₂O₃ and SiO₂ of less than 3%, as percentages by mass on the basis of the matrix.

9. Glass furnace according to any one of the five immediately preceding claims, wherein the ceramic matrix composite exhibits the following chemical analysis, as percentages by mass on the basis of the oxides and for a total of 100%:
- SiO₂: 47% - 67%,
- Al₂O₃: 32% - 52%,
- oxide species other than Al₂O₃ et SiO₂: < 5%.

10. Glass furnace according to any one of the preceding claims, wherein the insulating layer (40) is attached to the insulated surface.

11. Glass furnace according to any one of the preceding claims, wherein the insulated surface extends at least as far as the laying surface and/or as far as the tank surface (20₁₂).

12. Glass furnace according to any one of the preceding claims, wherein the insulated surface represents more than 60% of the lower transition surface (20₁₄₋₁₂) .

13. Glass furnace according to any one of the preceding claims, wherein the insulated surface extends at least to part of a horizontal portion of the lower transition surface (20₁₄₋₁₂) defined by the superstructure leg.

14. Glass furnace according to any one of the preceding claims, wherein the insulated surface extends at least to part of the laying surface (20₁₄).

15. Glass furnace according to any one of the preceding claims, wherein the insulated surface extends as far as a horizontal portion of the lower transition surface (20₁₄₋₁₂) defined by the tank leg, without covering said horizontal portion.

16. Glass furnace according to any one of Claims 1 to 13, wherein the insulated surface extends at least to part of a horizontal portion of the lower transition surface (20₁₄₋₁₂) defined by the tank leg.

17. Glass furnace according to any one of the preceding claims, wherein the insulating layer (40) is made of a sintered material and/or exhibits a thermal conductivity lower than 0.6 W.m⁻¹.K⁻¹ between 20°C and 500°C.

18. Glass furnace according to any one of the preceding claims, wherein the insulating layer (40) exhibits a sandwich structure comprising, in superposition, a first sheet of a ceramic matrix composite, a filling material exhibiting a thermal conductivity lower than 2.0 W.m⁻¹.K⁻¹ between 20°C and 500°C, and a second sheet of a ceramic matrix composite.
